# EUROPÄISCHE PATENTSCHRIFT

(11) **EP 3 830 445 B1**
(45) Veröffentlichungstag und Bekanntmachung des Hinweises auf die Patenterteilung: **01.06.2022**
(21) Anmeldenummer: 19769028.2
(22) Anmeldetag: 27.08.2019
(51) Int. Cl.: F16F 15/02, H02B 1/54

(54) **STOSSDÄMPFER FÜR EINE HOCHSPANNUNGSVORRICHTUNG**
SHOCK ABSORBER FOR A HIGH-VOLTAGE DEVICE
AMORTISSEUR DE CHOC POUR DISPOSITIF À HAUTE TENSION

(30) Priorität: 13.09.2018 DE 102018215586
(43) Veröffentlichungstag der Anmeldung: 09.06.2021
(73) Patentinhaber: Siemens Energy Global GmbH & Co. KG, 81739 München (DE)
(72) Erfinder: HEINRICH, Ulf, 14482 Potsdam (DE); RAMOS CORDERO, Edgar Armando, 10587 Berlin Charlottenburg (DE)
(86) Internationale Anmeldenummer: PCT/EP2019/072834
(87) Internationale Veröffentlichungsnummer: WO 2020/052964

(56) Entgegenhaltungen:
- US-A- 4 330 103
- US-A1- 2018 156 293
- US-B1- 6 385 917

## Beschreibung

Die Erfindung betrifft einen Stoßdämpfer und eine Stoßdämpferanordnung für eine Hochspannungsvorrichtung.

Hochspannungsvorrichtungen sind aufgrund ihrer jeweiligen Form, Masse und/oder Materialien häufig besonders gefährdet, durch seismische Anregungen beschädigt oder zerstört zu werden und müssen daher insbesondere in erdbebengefährdeten Gebieten vor derartigen Beschädigungen oder Zerstörungen geschützt werden.

DE 31 39 956 A1 offenbart einen Dämpfer zur Aufnahme von Schwingungen zwischen Fundament und Fußteil eines Gerätes, insbesondere eines in erdbebengefährdeten Gebieten aufzustellenden Hochspannungsschaltgerätes. Der Fußteil des Gerätes weist eine Platte auf, die von im Fundament verankerten Schraubbolzen durchdrungen ist und die auf an den Schraubbolzen angebrachten unteren Widerlagern aufliegt. Der Dämpfer weist zur Begrenzung des Biegemomentes bei Schwingungen und zur Schwingungsdämpfung Federelemente auf, die zwischen der Oberseite der Platte und an den Schraubbolzen angebrachten oberen Widerlagern, die Schraubbolzen konzentrisch umgebend angeordnet sind.

Aus der US 2018/156293 A1 ist ein Dämpfungssystem für eine Flugkontrolloberfläche eines Flugzeugs bekannt.

Der Erfindung liegt die Aufgabe zugrunde, einen verbesserten Stoßdämpfer und eine verbesserte Stoßdämpferanordnung für eine Hochspannungsvorrichtung anzugeben, durch die die Hochspannungsvorrichtung vor Beschädigungen und einer Zerstörung durch seismische Anregungen geschützt wird.

Die Aufgabe wird erfindungsgemäß durch einen Stoßdämpfer mit den Merkmalen des Anspruchs 1, eine Stoßdämpferanordnung mit den Merkmalen des Anspruchs 6 und deren Verwendung gemäß Anspruch 12 gelöst.

Vorteilhafte Ausgestaltungen der Erfindung sind Gegenstand der Unteransprüche.

Ein erfindungsgemäßer Stoßdämpfer für eine Hochspannungsvorrichtung umfasst ein Stabelement mit einem um eine Längsachse des Stabelements verlaufenden Außengewinde, zwei Halterungen, die das Stabelement stützen, ein Rotationselement, das ringartig um das Stabelement verläuft und ein in das Außengewinde eingreifendes Innengewinde aufweist, so dass Translationen des Stabelements entlang der Längsachse Rotationen des Rotationselements um die Längsachse bewirken, und ein Trägerelement, das an dem Rotationselement derart gelagert ist, dass Rotationen des Rotationselements um die Längsachse von dem Trägerelement entkoppeln.

Ein erfindungsgemäßer Stoßdämpfer dämpft die Auswirkungen seismischer Anregungen, die beispielsweise von Erdbeben verursacht werden, auf das Trägerelement. Dabei bewirken von den seismischen Anregungen verursachte Translationen des Stabelements entlang dessen Längsachse Rotationen des Rotationselements um die Längsachse, die Reibung zwischen dem Stabelement und dem Rotationselement des Stoßdämpfers bewirken. Diese Reibung und die Rotation des Rotationselements absorbieren Energie der Translationen und dämpfen die Auswirkung der seismischen Anregungen auf das Trägerelement. Das Trägerelement kann daher verwendet werden, um unmittelbar oder mittelbar eine Hochspannungsvorrichtung zu stützen und vor Auswirkungen seismischer Anregungen zu schützen.

Eine Ausgestaltung des erfindungsgemäßen Stoßdämpfers sieht vor, dass das Trägerelement durch wenigstens ein um die Längsachse verlaufendes Wälzlager an dem Rotationselement gelagert ist. Das wenigstens eine Wälzlager entkoppelt Rotationen des Rotationselements um die Längsachse von dem Trägerelement.

Eine weitere Ausgestaltung des erfindungsgemäßen Stoßdämpfers sieht vor, dass das Außengewinde in einem Mittelbereich des Stabelements angeordnet ist oder über die gesamte Ausdehnung des Stabelements zwischen den Halterungen verläuft. Dies ermöglicht relative Bewegungen des Stabelements und des Rotationselements entlang der Längsachse des Stabelements in beide Richtungen.

Der erfindungsgemäße Stoßdämpfer sieht wenigstens ein Rückstellelement vor, das bei einer Auslenkung des Rotationselements aus einer Gleichgewichtslage relativ zu dem Stabelement entlang der Längsachse eine der Auslenkung entgegenwirkende Rückstellkraft auf das Rotationselement ausübt. Insbesondere kann der Stoßdämpfer ein erstes Rückstellelement, das zwischen einer ersten Halterung und dem Rotationselement angeordnet ist, und ein zweites Rückstellelement, das zwischen der zweiten Halterung und dem Rotationselement angeordnet ist, aufweisen. Jedes Rückstellelement ist als eine um einen Abschnitt des Stabelements verlaufende Schraubenfeder ausgebildet, deren Schraubenachse parallel zur Längsachse des Stabelements verläuft. Diese Ausgestaltungen des Stoßdämpfers ermöglichen, das Rotationselement nach einer Bewegung relativ zu dem Stabelement entlang dessen Längsachse zurück in die Ausgangsposition zu bewegen.

Eine weitere Ausgestaltung des erfindungsgemäßen Stoßdämpfers sieht vor, dass jede Halterung ein Stabelementende des Stabelements stützt. Dadurch wird das Stabelement stabil an seinen beiden Stabelementenden gestützt.

Eine erfindungsgemäße Stoßdämpferanordnung für eine Hochspannungsvorrichtung umfasst wenigstens eine Stoßdämpfergruppe, die mehrere gemäß einem der vorhergehenden Ansprüche ausgebildete Stoßdämpfer aufweist, deren Stabelemente parallel zueinander angeordnet sind. Die zueinander parallele Anordnung mehrerer erfindungsgemäßer Stoßdämpfer ermöglicht, eine Hochspannungsvorrichtung durch die Trägerelemente der Stoßdämpfer unmittelbar oder mittelbar über weitere, auf den Trägerelementen angeordnete weitere Stoßdämpfer stoßdämpfend zu stützen. Dabei verhindert die Kopplung der Trägerelemente durch die Hochspannungsvorrichtung oder die weiteren Stoßdämpfer, dass das Trägerelement eines Stoßdämpfers der Stoßdämpfergruppe um die Längsachse des Stoßdämpfers rotiert.

Eine Ausgestaltung der erfindungsgemäßen Stoßdämpferanordnung sieht zwei Stoßdämpfergruppen vor, wobei die Stabelemente der Stoßdämpfer einer ersten Stoßdämpfergruppe nicht parallel, insbesondere senkrecht, zu den Stabelementen der Stoßdämpfer der zweiten Stoßdämpfergruppe angeordnet sind und die beiden Halterungen jedes Stoßdämpfers der ersten Stoßdämpfergruppe auf zwei voneinander verschiedenen Trägerelementen von Stoßdämpfern der zweiten Stoßdämpfergruppe angeordnet sind. Diese Ausgestaltung der erfindungsgemäßen Stoßdämpferanordnung ermöglicht die Dämpfung der Auswirkungen seismischer Anregungen in zwei verschiedenen Richtungen und somit in einer von diesen beiden Richtungen aufgespannten Ebene.

Eine weitere Ausgestaltung der erfindungsgemäßen Stoßdämpferanordnung sieht vor, dass das Trägerelement jedes Stoßdämpfers eine im Wesentlichen planare, von dem Rotationselement abgewandte Trägeroberfläche aufweist und die Trägeroberflächen der Stoßdämpfer jeder Stoßdämpfergruppe in einer gemeinsamen Trägerebene angeordnet sind. Beispielsweise sind die Trägerebenen voneinander verschiedener Stoßdämpfergruppen zueinander parallel. Diese Ausgestaltungen der erfindungsgemäßen Stoßdämpferanordnung vereinfachen die stabile Anordnung einer Hochspannungsvorrichtung auf der Stoßdämpferanordnung durch die Bereitstellung von in gemeinsamen Trägerebenen angeordneten Trägeroberflächen.

Eine weitere Ausgestaltung der erfindungsgemäßen Stoßdämpferanordnung sieht vor, dass jede Stoßdämpfergruppe zwei Stoßdämpfer aufweist. Diese Ausgestaltung der erfindungsgemäßen Stoßdämpferanordnung ermöglicht eine kostengünstige Realisierung der Stoßdämpferanordnung durch eine Minimalanzahl von Stoßdämpfern in jeder Stoßdämpfergruppe.

Den obigen Ausführungen entsprechend sieht die Erfindung insbesondere die Verwendung einer erfindungsgemäßen Stoßdämpferanordnung zur Dämpfung der Auswirkungen seismischer Anregungen auf eine Hochspannungsvorrichtung vor, wobei die Hochspannungsvorrichtung auf Trägerelementen der Stoßdämpfer einer Stoßdämpfergruppe montiert wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine Seitenansicht eines Stoßdämpfers für eine Hochspannungsvorrichtung,
- FIG 2: eine Schnittdarstellung eines Stoßdämpfers für eine Hochspannungsvorrichtung,
- FIG 3: einen Ausschnitt einer Schnittdarstellung eines Stoßdämpfers für eine Hochspannungsvorrichtung,
- FIG 4: eine perspektivische Darstellung einer Stoßdämpferanordnung für eine Hochspannungsvorrichtung.

Einander entsprechende Teile sind in den Figuren mit denselben Bezugszeichen versehen.

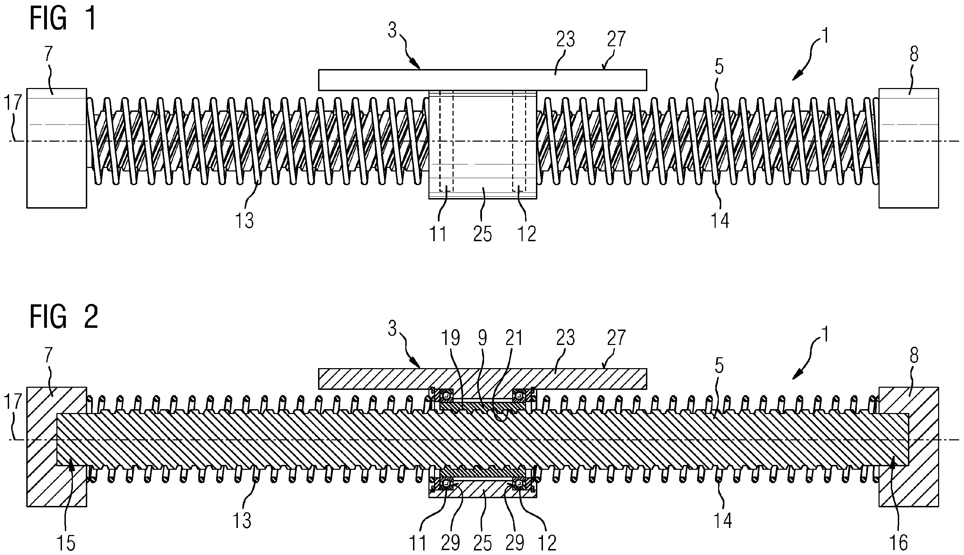

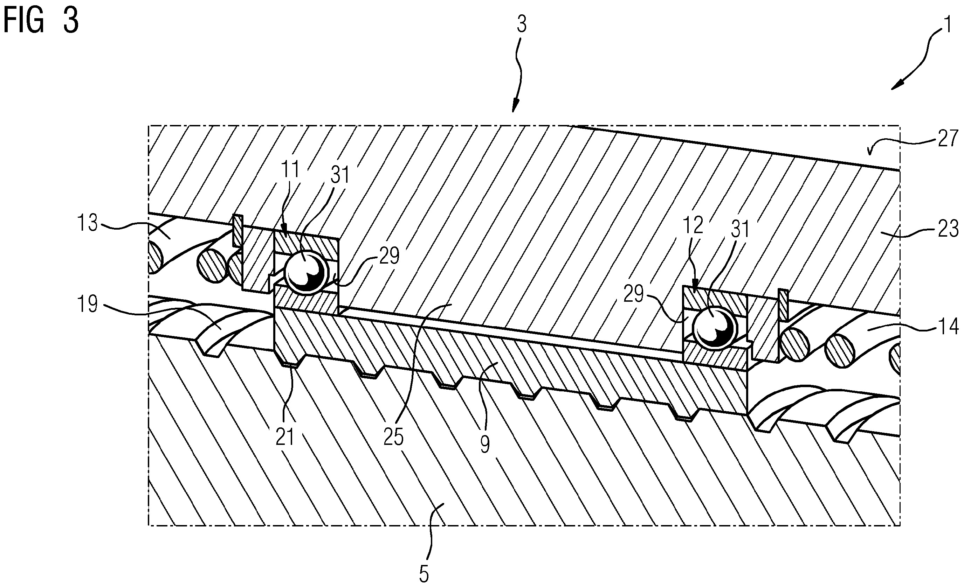

Die Figuren 1 bis 3 zeigen ein Ausführungsbeispiel eines erfindungsgemäßen Stoßdämpfers 1 für eine Hochspannungsvorrichtung. Figur 1 zeigt eine Seitenansicht des Stoßdämpfers 1, Figur 2 zeigt eine Schnittdarstellung des Stoßdämpfers 1 und Figur 3 zeigt einen Ausschnitt einer Schnittdarstellung des Stoßdämpfers 1.

Der Stoßdämpfer 1 weist ein Trägerelement 3, ein Stabelement 5, zwei Halterungen 7, 8, ein Rotationselement 9, zwei Wälzlager 11, 12 und zwei Rückstellelemente 13, 14 auf.

Jede Halterung 7, 8 stützt ein Stabelementende 15, 16 des Stabelements 5.

Das Stabelement 5 weist ein um eine Längsachse 17 des Stabelements 5 zwischen den Halterungen 7, 8 verlaufendes Außengewinde 19 auf.

Das Rotationselement 9 verläuft ringartig um das Stabelement 5 und weist ein in das Außengewinde 19 eingreifendes Innengewinde 21 auf, so dass Translationen des Stabelements 5 entlang der Längsachse 17 Rotationen des Rotationselements 9 um die Längsachse 17 bewirken.

Das Trägerelement 3 weist eine Trägerplatte 23 und einen an der Trägerplatte 23 angeordneten Trägerring 25 auf. Der Trägerring 25 verläuft ringartig um das Rotationselement 9 herum. Die Trägerplatte 23 weist eine planare, von dem Rotationselement 9 abgewandte Trägeroberfläche 27 auf.

Die Wälzlager 11, 12 lagern das Trägerelement 3 an dem Rotationselement 9, wobei sie Rotationen des Rotationselements 9 um die Längsachse 17 von dem Trägerelement 3 entkoppeln. Jedes Wälzlager 11, 12 weist eine ringförmig um die Längsachse 17 verlaufende Ringausnehmung 29 auf, in der Wälzkörper 31 angeordnet sind.

Jedes Rückstellelement 13, 14 ist als eine Schraubenfeder ausgebildet, die zwischen einer Halterung 7, 8 und dem Rotationselement 9 um das Stabelement 5 herum verläuft und deren Schraubenachse parallel zur Längsachse 17 des Stabelements 5 verläuft. Die Rückstellelemente 13, 14 üben bei einer Auslenkung des Rotationselements 9 aus einer Gleichgewichtslage relativ zu dem Stabelement 5 entlang der Längsachse 17 jeweils eine der Auslenkung entgegenwirkende Rückstellkraft auf das Rotationselement 9 aus.

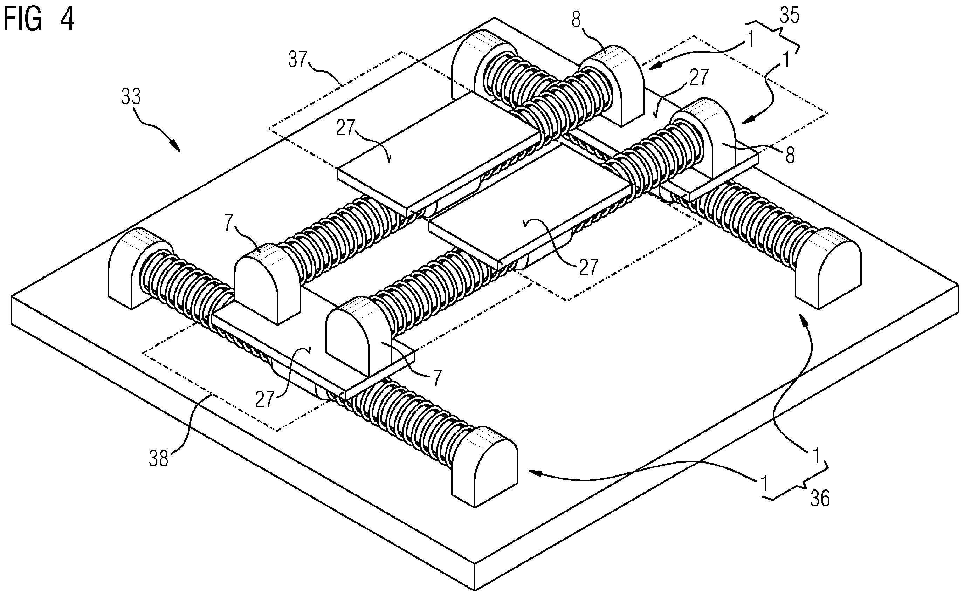

Figur 4 zeigt ein Ausführungsbeispiel einer erfindungsgemäßen Stoßdämpferanordnung 33 für eine Hochspannungsvorrichtung. Die Stoßdämpferanordnung 33 weist zwei Stoßdämpfergruppen 35, 36 auf, die jeweils zwei in den Figuren 1 bis 3 gezeigte Stoßdämpfer 1 aufweisen. Die beiden Stoßdämpfer 1 jeder Stoßdämpfergruppe 35, 36 sind zueinander parallel angeordnet. Die Stoßdämpfer 1 einer ersten Stoßdämpfergruppe 35 sind senkrecht zu den Stoßdämpfern 1 der zweiten Stoßdämpfergruppe 36 angeordnet. Unter einer zueinander parallelen Anordnung zweier Stoßdämpfer 1 wird eine Anordnung der beiden Stoßdämpfer 1 verstanden, bei der die Längsachsen 17 der Stabelemente 5 der beiden Stoßdämpfer 1 parallel zueinander verlaufen. Entsprechend wird unter einer zueinander senkrechten Anordnung zweier Stoßdämpfer 1 eine Anordnung der beiden Stoßdämpfer 1 verstanden, bei der die Längsachsen 17 der Stabelemente 5 der beiden Stoßdämpfer 1 senkrecht zueinander verlaufen.

Erste Halterungen 7 der beiden Stoßdämpfer 1 der ersten Stoßdämpfergruppe 35 sind auf der Trägeroberfläche 27 eines Stoßdämpfers 1 der zweiten Stoßdämpfergruppe 36 angeordnet, die zweiten Halterungen 8 der beiden Stoßdämpfer 1 der ersten Stoßdämpfergruppe 35 sind auf der Trägeroberfläche 27 des anderen Stoßdämpfers 1 der zweiten Stoßdämpfergruppe 36 angeordnet. Die Trägeroberflächen 27 der Stoßdämpfer 1 jeder Stoßdämpfergruppe 35, 36 sind in einer gemeinsamen Trägerebene 37, 38 angeordnet, wobei die beiden Trägerebenen 37, 38 zueinander parallel sind.

Die Hochspannungsvorrichtung wird auf den Trägeroberflächen 27 der Stoßdämpfer 1 der ersten Stoßdämpfergruppe 35 montiert.

Die Stoßdämpferanordnung 33 dämpft die Auswirkungen seismischer Anregungen, die beispielsweise von Erdbeben verursacht werden, auf die Hochspannungsvorrichtung. Dabei bewirken von den seismischen Anregungen verursachte Translationen eines Stoßdämpfers 1 entlang der Längsachse 17 des Stoßdämpfers 1 Rotationen des Rotationselements 9 des Stoßdämpfers 1 um die Längsachse 17, die Reibung zwischen dem Stabelement 5 und dem Rotationselement 9 des Stoßdämpfers 1 bewirken. Diese Reibung und die Rotation des Rotationselements 9 absorbieren Energie der Translationen und dämpfen die Auswirkung der seismischen Anregungen auf die Hochspannungsvorrichtung. Die zueinander parallele Anordnung der beiden Stoßdämpfer 1 der zweiten Stoßdämpfergruppe 36 und die Kopplung der Trägerelemente 3 dieser beiden Stoßdämpfer 1 durch die beiden auf ihnen montierten Stoßdämpfer 1 der ersten Stoßdämpfergruppe 35 verhindert, dass das Trägerelement 3 eines Stoßdämpfers 1 der zweiten Stoßdämpfergruppe 36 um die Längsachse 17 des Stoßdämpfers 1 rotiert. Entsprechend verhindert die zueinander parallele Anordnung der beiden Stoßdämpfer 1 der ersten Stoßdämpfergruppe 35 und die Kopplung der Trägerelemente 3 dieser beiden Stoßdämpfer 1 durch die auf ihnen montierte die Hochspannungsvorrichtung, dass das Trägerelement 3 eines Stoßdämpfers 1 der ersten Stoßdämpfergruppe 35 um die Längsachse 17 des Stoßdämpfers 1 rotiert. Die zueinander senkrechte Anordnung der Stoßdämpfer 1 der beiden Stoßdämpfergruppen 35, 36 ermöglicht die Dämpfung der Auswirkungen seismischer Anregungen in zueinander senkrechten Richtungen und somit in einer von diesen beiden Richtungen aufgespannten Ebene.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Stoßdämpfer (1) für eine Hochspannungsvorrichtung, der Stoßdämpfer (1) umfassend
- ein Stabelement (5) mit einem um eine Längsachse (17) des Stabelements (5) verlaufenden Außengewinde (19),
- zwei Halterungen (7, 8), die das Stabelement (5) stützen,
- ein Rotationselement (9), das ringartig um das Stabelement (5) verläuft und ein in das Außengewinde (19) eingreifendes Innengewinde (21) aufweist, so dass Translationen des Stabelements (5) entlang der Längsachse (17) Rotationen des Rotationselements (9) um die Längsachse (17) bewirken, und
- ein Trägerelement (3), das an dem Rotationselement (9) derart gelagert ist, dass Rotationen des Rotationselements (9) um die Längsachse (17) von dem Trägerelement (3) entkoppeln, **dadurch gekennzeichnet, dass**
wenigstens ein Rückstellelement (13, 14) umfasst ist, das bei einer Auslenkung des Rotationselements (9) aus einer Gleichgewichtslage relativ zu dem Stabelement (5) entlang der Längsachse (17) eine der Auslenkung entgegenwirkende Rückstellkraft auf das Rotationselement (9) ausübt, und wobei jedes Rückstellelement (13, 14) als eine um einen Abschnitt des Stabelements (5) verlaufende Schraubenfeder ausgebildet ist, deren Schraubenachse parallel zur Längsachse (17) des Stabelements (5) verläuft.

2. Stoßdämpfer (1) nach Anspruch 1, wobei das Trägerelement (3) durch wenigstens ein um die Längsachse (17) verlaufendes Wälzlager (11, 12) an dem Rotationselement (9) gelagert ist.

3. Stoßdämpfer (1) nach Anspruch 1 oder 2, wobei das Außengewinde (19) in einem Mittelbereich des Stabelements (5) angeordnet ist oder über die gesamte Ausdehnung des Stabelements (5) zwischen den Halterungen (7, 8) verläuft.

4. Stoßdämpfer (1) nach Anspruch 1 mit einem ersten Rückstellelement (13), das zwischen einer ersten Halterung (7) und dem Rotationselement (9) angeordnet ist, und einem zweiten Rückstellelement (14), das zwischen der zweiten Halterung (8) und dem Rotationselement (9) angeordnet ist.

5. Stoßdämpfer (1) nach einem der vorhergehenden Ansprüche, wobei jede Halterung (7, 8) ein Stabelementende (15, 16) des Stabelements (5) stützt.

6. Stoßdämpferanordnung (33) für eine Hochspannungsvorrichtung, die Stoßdämpferanordnung (33) umfassend wenigstens eine Stoßdämpfergruppe (35, 36), die mehrere gemäß einem der vorhergehenden Ansprüche ausgebildete Stoßdämpfer (1) aufweist, deren Stabelemente (5) parallel zueinander angeordnet sind.

7. Stoßdämpferanordnung (33) nach Anspruch 6, umfassend zwei Stoßdämpfergruppen (35, 36), wobei die Stabelemente (5) der Stoßdämpfer (1) einer ersten Stoßdämpfergruppe (35) nicht parallel zu den Stabelementen (5) der Stoßdämpfer (1) der zweiten Stoßdämpfergruppe (36) angeordnet sind und die beiden Halterungen (7, 8) jedes Stoßdämpfers (1) der ersten Stoßdämpfergruppe (35) auf zwei voneinander verschiedenen Trägerelementen (3) von Stoßdämpfern (1) der zweiten Stoßdämpfergruppe (36) angeordnet sind.

8. Stoßdämpferanordnung (33) nach Anspruch 6 oder 7, wobei die Stabelemente (5) der Stoßdämpfer (1) einer ersten Stoßdämpfergruppe (35) senkrecht zu den Stabelementen (5) der Stoßdämpfer (1) der zweiten Stoßdämpfergruppe (36) angeordnet sind.

9. Stoßdämpferanordnung (33) nach einem der Ansprüche 6 bis 8, wobei das Trägerelement (3) jedes Stoßdämpfers (1) eine im Wesentlichen planare, von dem Rotationselement (9) abgewandte Trägeroberfläche (27) aufweist und die Trägeroberflächen (27) der Stoßdämpfer (1) jeder Stoßdämpfergruppe (35, 36) in einer gemeinsamen Trägerebene (37, 38) angeordnet sind.

10. Stoßdämpferanordnung (33) nach Anspruch 9, wobei die Trägerebenen (37, 38) voneinander verschiedener Stoßdämpfergruppen (35, 36) zueinander parallel sind.

11. Stoßdämpferanordnung (33) nach einem der Ansprüche 6 bis 10, wobei jede Stoßdämpfergruppe (35, 36) zwei Stoßdämpfer (1) aufweist.

12. Verwendung einer Stoßdämpferanordnung (33) nach einem der Ansprüche 6 bis 11 zur Dämpfung der Auswirkungen seismischer Anregungen auf eine Hochspannungsvorrichtung, wobei die Hochspannungsvorrichtung auf Trägerelementen (3) der Stoßdämpfer (1) einer Stoßdämpfergruppe (35, 36) montiert wird.

## Claims

1. Shock absorber (1) for a high-voltage device, the shock absorber (1) comprising
- a rod element (5) having an external thread (19) running around a longitudinal axis (17) of the rod element (5),
- two holders (7, 8) which support the rod element (5),
- a rotational element (9) which runs in the manner of a ring around the rod element (5) and has an internal thread (21) engaging into the external thread (19), so that translations of the rod element (5) along the longitudinal axis (17) cause rotations of the rotational element (9) about the longitudinal axis (17), and
- a carrier element (3) which is mounted on the rotational element (9) in such a way that rotations of the rotational element (9) about the longitudinal axis (17) decouple from the carrier element (3),
**characterized in that**
at least one resetting element (13, 14) is included which, in the event of a deflection of the rotational element (9) out of an equilibrium position relative to the rod element (5) along the longitudinal axis (17), exerts a resetting force counteracting the deflection on the rotational element (9), and wherein each resetting element (13, 14) is designed as a helical spring running around a portion of the rod element (5), the helix axis of the helical spring running parallel to the longitudinal axis (17) of the rod element (5).

2. Shock absorber (1) according to Claim 1, wherein the carrier element (3) is mounted on the rotational element (9) by at least one roller bearing (11, 12) running around the longitudinal axis (17).

3. Shock absorber (1) according to Claim 1 or 2, wherein the external thread (19) is arranged in a central region of the rod element (5) or runs between the holders (7, 8) over the entire extent of the rod element (5).

4. Shock absorber (1) according to Claim 1 having a first resetting element (13) which is arranged between a first holder (7) and the rotational element (9), and a second resetting element (14) which is arranged between the second holder (8) and the rotational element (9).

5. Shock absorber (1) according to one of the preceding claims, wherein each holder (7, 8) supports a rod element end (15, 16) of the rod element (5).

6. Shock absorber arrangement (33) for a high-voltage device, the shock absorber arrangement (33) comprising at least one shock absorber group (35, 36) which has a plurality of shock absorbers (1) designed according to one of the preceding claims, the rod elements (5) of the shock absorbers being arranged parallel to one another.

7. Shock absorber arrangement (33) according to Claim 6, comprising two shock absorber groups (35, 36), wherein the rod elements (5) of the shock absorbers (1) of a first shock absorber group (35) are not arranged parallel to the rod elements (5) of the shock absorbers (1) of the second shock absorber group (36), and the two holders (7, 8) of each shock absorber (1) of the first shock absorber group (35) are arranged on two differing carrier elements (3) of shock absorbers (1) of the second shock absorber group (36).

8. Shock absorber arrangement (33) according to Claim 6 or 7, wherein the rod elements (5) of the shock absorbers (1) of a first shock absorber group (35) are arranged perpendicular to the rod elements (5) of the shock absorbers (1) of the second shock absorber group (36).

9. Shock absorber arrangement (33) according to one of Claims 6 to 8, wherein the carrier element (3) of each shock absorber (1) has a substantially planar carrier surface (27) averted from the rotational element (9), and the carrier surfaces (27) of the shock absorbers (1) of each shock absorber group (35, 36) are arranged in a common carrier plane (37, 38).

10. Shock absorber arrangement (33) according to Claim 9, wherein the carrier planes (37, 38) of differing shock absorber groups (35, 36) are parallel to one another.

11. Shock absorber arrangement (33) according to one of Claims 6 to 10, wherein each shock absorber group (35, 36) has two shock absorbers (1).

12. Use of a shock absorber arrangement (33) according to one of Claims 6 to 11 for damping the effects of seismic excitations on a high-voltage device, wherein the high-voltage device is mounted on carrier elements (3) of the shock absorbers (1) of a shock absorber group (35, 36).

## Revendications

1. Amortisseur (1) de choc d'un dispositif à haute tension, l'amortisseur (1) de choc comprenant
- un élément (5) formant barre ayant un filet (19) extérieur, s'étendant autour d'un axe (17) longitudinal de l'élément (5) formant barre,
- deux fixations (7, 8), qui soutiennent l'élément (5) formant barre,
- un élément (9) de rotation, qui s'étend à la manière d'un anneau autour de l'élément (5) formant barre et qui a un filet (21) intérieur engrenant dans le filet (19) extérieur, de manière à ce que des translations de l'élément (5) formant barre, le long de l'axe (17) longitudinal, provoque des rotations de l'élément (9) de rotation autour de l'axe (17) longitudinal, et
- un élément (3) de support, qui est monté sur l'élément (9) de rotation, de manière à ce que des rotations de l'élément (9) de rotation autour de l'axe (17) longitudinal découplent de l'élément (3) de support,
**caractérisé en ce que**
il y a au moins un élément (13, 14) de rappel, qui, lorsque l'élément (9) de rotation est dévié d'une position d'équilibre par rapport à l'élément (5) formant barre le long de l'axe (17) longitudinal, applique à l'élément (9) de rotation, une force de rappel s'opposant à la déviation et dans lequel chaque élément (13, 14) de rappel est constitué sous la forme d'un ressort hélicoïdal s'étendant autour d'un tronçon de l'élément (5) formant barre, dont l'axe de l'hélicoïde s'étend parallèlement à l'axe (17) longitudinal de l'élément (5) formant barre.

2. Amortisseur (1) de choc suivant la revendication 1, dans lequel l'élément (3) de support est monté sur l'élément (9) de rotation par au moins un palier (11, 12) à roulement s'étendant autour de l'axe (17) longitudinal.

3. Amortisseur (1) de choc suivant la revendication 1 ou 2, dans lequel le filet (19) extérieur est disposé dans une partie médiane de l'élément (5) formant barre ou s'étend sur toute l'étendue de l'élément (5) formant barre entre les fixations (7, 8).

4. Amortisseur (1) de choc suivant la revendication 1, comprenant un premier élément (13) de rappel, qui est monté entre une première fixation (7) et l'élément (9) de rotation, et un deuxième élément (14) de rappel, qui est monté entre la deuxième fixation (8) et l'élément (9) de rotation.

5. Amortisseur (1) de choc suivant l'une des revendications précédentes, dans lequel chaque fixation (7, 8) soutient une extrémité (15, 16) de l'élément (5) formant barre.

6. Agencement (33) d'amortisseur de choc pour un dispositif à haute tension, l'agencement (33) d'amortisseur de choc comprenant au moins un groupe (35, 36) d'amortisseurs, qui a plusieurs amortisseurs (1) de choc constitués suivant l'une des revendications précédentes, dont les éléments (5) formant barre sont disposés parallèlement entre eux.

7. Agencement (33) d'amortisseur de choc suivant la revendication 6, comprenant deux groupes (35, 36) d'amortisseurs de choc, dans lequel les éléments (5) formant barre des amortisseurs (1) de choc d'un premier groupe (35) d'amortisseurs de choc ne sont pas disposés parallèlement aux éléments (5) formant barre des amortisseurs (1) de choc du deuxième groupe (36) d'amortisseurs de choc, et les deux fixations (7, 8) de chaque amortisseur (1) de choc du premier groupe (35) d'amortisseurs de choc sont montées sur deux éléments (3) de support différents l'un de l'autre d'amortisseurs (1) de choc du deuxième groupe (36) d'amortisseurs de choc.

8. Agencement (33) d'amortisseur de choc suivant la revendication 6 ou 7, dans lequel les éléments (5) formant barre des amortisseurs (1) de choc d'un premier groupe (35) d'amortisseurs de choc sont disposés perpendiculairement aux éléments (5) formant barre des amortisseurs (1) de choc du deuxième groupe (36) d'amortisseurs de choc.

9. Agencement (33) suivant l'une des revendications 6 à 8, dans lequel l'élément (3) de support de chaque amortisseur (1) de choc a une surface (27) de support sensiblement plane, loin de l'élément (9) de rotation, et les surfaces (27) de support des amortisseurs (1) de choc de chaque groupe (35, 36) d'amortisseurs de choc sont disposées dans un plan (37, 38) de support commun.

10. Agencement (33) suivant la revendication 9, dans lequel les plans (37, 38) de support de groupes (35, 36) d'amortisseurs de choc différents l'un de l'autre sont parallèles entre eux.

11. Agencement (33) suivant l'une des revendications 6 à 10, dans lequel chaque groupe (35, 36) d'amortisseurs de choc a deux amortisseurs (1) de choc.

12. Utilisation d'un agencement (33) d'amortisseur de choc suivant l'une des revendications 6 à 11, pour l'amortissement des effets d'excitation sismique sur un dispositif à haute tension, le dispositif à haute tension étant monté sur des éléments (3) de support des amortisseurs (1) de choc d'un groupe (35, 36) d'amortisseurs de choc.
